# EUROPEAN PATENT APPLICATION

(11) **EP 3 760 046 A1**
(43) Date of publication of application: **06.01.2021**
(21) Application number: 19184101.4
(22) Date of filing: 03.07.2019
(51) Int. Cl.: A21D 10/04, B65B 25/00, B65D 35/00, B65D 83/00, B65D 85/72

(54) **METHOD FOR THE PREPARATION OF FRESH BATTER WITH EXTENDED SHELF-LIFE**

(71) Applicant: Frizle Fresh Foods AG, 69118 Heidelberg (DE)
(72) Inventor: Sluk, Martin, 69118 Heidelberg (DE); Sorgatz, Cornelia, 76698 Ubstadt-Weiher (DE)
(74) Representative: Gille Hrabal

(57) **Abstract**

The present invention relates to a novel method for the production of fresh pourable batter on the basis of starch-containing components with extended shelf-life by carrying out a low temperature pasteurization of the batter on the basis of starch-containing components in a sealed package. This mild method ensures that rheological properties and sensory qualities as well as the preservation of desired compounds like vitamins of sweet or salty batter are maintained. The invention further relates to the fresh pourable batter on the basis of starch-containing components with extended shelf-life obtainable with the novel method.

## Description

### TECHNICAL FIELD

The present invention relates to a novel method for the production of fresh pourable batter on the basis of starch-containing components with extended shelf-life by carrying out a low temperature pasteurization of the batter on the basis of starch-containing components in a sealed package. This mild method ensures that rheological properties and sensory qualities as well as the preservation of desired compounds like flavors and vitamins of sweet or salty batter are maintained. The invention further relates to the fresh pourable batter on the basis of starch-containing components with extended shelf-life obtainable with the novel method.

### BACKGROUND AND RELEVANT STATE OF THE ART

There are batters for many preferences, including sweet, savoury and salty variations. Fresh batters, e. g. for pancakes or spaetzle, are mixed prior to cooking or baking and should be fried out in a timely manner. Preparing such fresh and tasty batters requires effort and time for the consumers.

In order to save time and effort there are industrially pre-fabricated batters. Such ready-to-use mixtures are commercially available and popular among consumers because of their convenient and quick use. The ready-to-use batter should therefore be storable for weeks, months or even years without losing the desired properties.

For example, dry powder mixtures of the dry batter ingredients are commercially available, which have to be mixed with liquid components such as water or milk by the consumer for preparing the pourable batter prior to baking or cooking. Among the ready-to-use batter such dry pre-mixtures provide the longest shelf-life. However, the rheological and sensory properties of such dry pre-mixtures are not as good as those of home-made fresh batter. The consumer still needs to add additional fresh components such as the liquid component. Depending on the skills of the consumer and the selected fresh components, this may influence the rheological properties depending on the kind and amount of liquid added by the consumer. Also the sensory properties of batter prepared from such dry pre-mixtures are not the same as those of batter prepared with fresh ingredients. To guarantee stable batter preparation despite these possible preparation influences by the consumer such dry pre-mixtures contain a variety of stabilizing ingredients. Batter prepared with such dry pre-mixtures do not taste like home-made fresh batter based products but always suffer from the compromise of long shelf-life and stabilization against unfavorable consumer influences.

Also fresh ready-to-use batters, which already contain also the liquid component, are commercially available. Due to the water content such fresh ready-to-use products are only available with remarkably shorter shelf-life than the dry pre-mixtures. To prolong shelf-life, microbial contamination of food and thus of batter can be prevented by reducing the water content as well as by adding chemical preservatives. It is further a common method to minimize the microbial contamination of the food ingredients, e.g. by heating processes as pasteurization or sterilization.

The addition of chemical preservatives to food and thus to fresh batter preparations is often a commonly used option to prevent microbial spoilage by inhibiting the growth of microorganisms. Most preservatives only work against certain microorganisms and only under certain environmental conditions. In order to combat as many microorganisms as possible, several preservatives are often combined in one food. However, adding chemical additives such as preservatives is limited by the food regulations to ensure that the quantities used are not greater than those absolutely necessary as many suitable preservatives have undesirable properties and can adversely affect human health. Therefore, additives such as chemical preservatives are less desired by consumers and can also negatively influence the sensory properties of the fresh batter preparation.

As further common method of making food permanently durable, a sterilization or pasteurization process can be used for many foods, including fresh batter, wherein microbial contamination of the food product is reduced by heat treatment. Under conventional sterilization conditions the products, such as batter, are heated to temperatures over 100 °C for a longer period of time than in a pasteurization process. Due to this process, the microorganisms are killed and the food becomes sterile and durable for years. However, sterilization proceedings with the extremely high and extended temperature influence destroy heat-sensitive natural food ingredients of the food products, such as in particular flavors, vitamins or enzymes, and the nutritional, sensory and rheological properties can deteriorate.

In contrast during pasteurization the food, including batter, is briefly heated to a core temperature below 100 °C, usually within less than a minute. This is a milder heating method to maintain the sensory and rheological quality of products, which are too much deteriorated by a sterilization process due to the high temperatures. Pasteurized food is briefly heated to a core temperature of not more than 100 °C. Also with pasteurization the number of heat-sensitive microorganisms in food is reduced and this milder heat treatment affects the nutritional and sensory character of the pasteurized food less than a sterilization process.

EP 2 025 232 relates to a process for producing a dough, in particular a waffle dough, in which at least one mass, containing at least flour and oil, is mixed with a liquid phase, containing at least water and/or milk components. The flour- and oil-containing mass and the liquid phase are each preserved by sterilization at more than 100 °C separately from one another before they are mixed with one another. After mixing, preferably under sterile ambient conditions, the resulting dough is portioned and filled. According to the application an estimated shelf-life of 8 weeks at room temperature is achieved.

The international application WO 2007/011236 discloses a food precursor composition, a process for the production of the precursor food composition also with heating temperatures of up to 150 °C and uses of such a preparation. The application concerns especially a fluid to semi-fluid preparation which is suitable for making flour food products such as waffles, pancakes, muffins, sugar bread, sponge cake, pre-made layers for layer-cake etc., but which is also suitable for making sauces and thickeners and wherein the swelling properties of the flour have been maintained in the semi-liquid or liquid preparation. The process for producing such a food precursor product comprises a heating step of certain ingredients of 50 °C - 150 °C for a suitable time interval to sterilize the composition by removing/killing microorganisms to produce a first phase with a sufficiently low bacterial count, e.g. for a time interval of 1-15 minutes. After mixing all phases the composition is cooled below 15 °C before packaging. This process line is described to make it possible to produce liquid food precursor products such as sauces, thickeners and batter with a shelving lifetime of at least 6 weeks in a refrigerated state at 0 °C to 4 °C.

WO 2017/212261 relates to a bakery food product produced from a mucilaginous hydrocolloid and a mannan-based hydrocolloid. The bakery food product is of low fat content and has a long shelf-life from 3 to 24 months or longer due to sterilization. Also provided is a method for making the bakery food product, and a liquid mixture for making a bakery product. Also provided are dehydrated food products produced from a mucilaginous hydrocolloid and a mannan-based hydrocolloid. The disclosed method comprises a step of heating the liquid mixture to remove water and provide a substantially dehydrated food product. The method of making a bakery food product comprises a heating step that is performed at a temperature between 80 °C to 200 °C, preferably between 135 °C to 140 °C.

All these procedures are characterized by heating temperatures of more than 100 °C. However, such a heating procedure changes product quality caused by rising temperatures as described above. In particular, food products on the basis of starch containing ingredients and eggs, such as fresh (raw) batter, are also affected by the temperature treatment regarding undesired gelatinization of the starch and denaturation of the egg components.

For example, fresh eggs are heat sensitive as during egg cooking, the yolk stiffens at about 65 °C. The egg protein consists of two components: the conalbumin, which coagulates at a temperature of 61.5 °C and higher, and the ovalbumin, which does not solidify until 84.5 °C. Thus, to avoid pre-cooking, stiffening and denaturation of the fresh egg components temperatures above 61.5 °C may deteriorate egg containing products. Nevertheless, the pasteurization temperature must be sufficient to effectively kill microorganisms (including salmonella).

Gelatinization is characterized by the irreversible swelling of the starch granules due to the heating process. Parts of amylose diffuse out of the granules and the starch is swelling by absorbing 20 to 40 g water per g starch until the grains burst. The result is a gelatinous mass, which induces an increase of viscosity. At temperatures above 100 °C a transition from a glassy state to a rubbery state take place. The gelatinization temperature of the starch depends on the source, according to H.-D. Belitz, W. Grosch, P. Schieberle; Lehrbuch der Lebensmittelchemie; Springer Verlag; 6. Edition; 2007 e.g. rye starch gelatinizes between 57 to 70 °C, whereas wheat starch undergoes gelatinization at temperatures between 53 to 65 °C. The enzyme amylase breaks down gelatinized starch into sugars much more intensively than in the original state making gelatinized starch more susceptible to excessive starch degradation. Such changes of the starch remarkably influence the character of starch-based foods, such as viscosity and oral sensation or texture.

The international application WO 03/022062 solves the problem of undesired gelatinization of the starch at too high temperatures by adding ester compounds. A method of producing a liquid batter with a heat treatment at a temperature above 55 °C up to 140 °C is described. Therefore, a heated liquid phase substance and a solid phase substance comprising flour and at least one disaccharide ester are mixed. The addition of the ester to the flour allows a heat treatment of about 140 °C and a holding period of approximately 5.5 minutes without gelatinization of the starch. This procedure leads to a shelf-life of the dough of at least 25 days when kept at temperatures of 0 °C to 8 °C. However, this procedure needs the addition of the ester the use of which is subjected to the specific food regulation requirements. Further, as mentioned above, adding food additives is less desired by consumers with increasing awareness of healthy and natural food.

The international application WO 02/37970 avoids the problem of undesired gelatinization during pasteurization by selecting a particular starch with an increased gelatinization temperature and discloses a ready-to use refrigerable liquid batter for preparing pancakes, waffles, brownies, muffins, cakes and the like, having a shelf-life which is substantially extended in comparison with a freshly prepared liquid batter and a method for its production. The batter of this application, comprising a starch component and an organic acid or a mixture of organic acids, is characterized in that it has been microbially stabilized by heating to a temperature below the gelatinization temperature of the specifically selected starch components for a time period sufficient to substantially reduce the bacterial count of the batter so as to make the batter storable for at least 3 weeks at a temperature of 8 °C or lower. In this application, the starch component has an increased gelatinization temperature and therefore allows the batter to be pasteurized at a temperature below the gelatinization temperature of the starch component. The process of production is based on the use of flours with an increased gelatinization temperature of 60 °C to 72 °C. The heated dough is stabilized by holding a temperature below the gelatinization temperature of the flour for preferably 2 - 10 minutes. After cooling, it is aseptically filled into the packaging. The process and batter described therein are limited in the choice and variability of starches, which have to be characterized by an increased gelatinization temperature. The applicability of this method is thus not widely applicable to varying starch-based food products. To achieve sufficient antimicrobial stability and thus sufficient shelf-life despite the low temperature treatment the aseptic packaging step needs to be done. However, any additional handling step, such as a separate packaging-step after the heat-treatment bears the risk of microbial re-contamination and increases the technical and procedural effort making the described method less efficient.

US2870026 relates to a novel refrigerated baking batter product and to a process of producing it. The patent claims a process of making a stable refrigerated batter which comprises preparing a batter, subjecting the batter to a stabilization treatment at a temperature within the approximate range of 145 to 185 °F (62 °C to 85 °C) for 10 seconds to 30 minutes, the longer time period being employed at a lower temperature, the cooling step of the batter is at a temperature above the freezing point but below 145 °F or 120 °F (62 °C or 49 °C), if the batter contains leavening ingredients. Heating times exceeding 10 minutes at 145 °F (62 °C) are described to have no bonus effect on batter stability and are found not warranted commercially. This application discloses a mild heating treatment followed by introducing air or nitrogen into the batter with a whipper to reduce the specific gravity of the batter and cooling of the batter. After the heat treatment the batter is packaged, e.g. in hermetically sealed cans and refrigerated for storing. As mentioned above, such additional packaging step increases the risk of re-contamination and is less efficient under technical and procedural viewpoints.

A further application dealing with the problem of an increased risk for microbial contamination is the prior art document US 2013/034642. Therein, a ready-to-bake cheesecake batter and method for its manufacture are disclosed. The method includes the steps of combining cream cheese, cream, sweetener, and eggs to form a mixture, heating the mixture to at least 140 °F (60 °C), to create a heated mixture, injecting an inert gas into the heated mixture, aerating the heated mixture and cooling the heated mixture to form a batter. The batter is stable when stored for over 4 to 6 months such that when baked, the batter provides a cake similar to a fresh made-from-scratch cake. However, the batter described therein contains no starch-based ingredients, in particular no flour.

In the above described pasteurization methods, the food is heated in open systems and an additional packaging step is required, which is disadvantageous for the above explained reasons.

IN 2018/21036346 describes a method for preparing a ready-to-cook fermented batter consisting of rice and black gram, wherein the fermented batter is packed in a breathable packaging material (controlled transmission laminate), followed by placing the fermented batter pack in a water bath and carrying out a mild pasteurization treatment in the pack at temperatures of 35 °C to 80 °C for 30 to 120 minutes. However, the batter described therein is not in a pourable state and comprises only rice starch (having a gelatinization temperature of > 61 °C) and starch from black gram (beans starch having a gelatinization temperature of > 64 °C). The problem of undesired gelatinization is not mentioned therein at all. In contrast, the new process of the present invention allows processing also starches with lower gelatinization temperatures, such as in particular the most common wheat starch. The batter described therein contains a significant amount of lactic acid bacteria and yeasts to achieve the desired fermentation. The temperature treatment applied therein is used to control the fermentation. However, as fermentation is desired, this method is apparently not suitable to kill the fermentation active microorganisms such as lactic acid bacteria and yeasts sufficiently and avoid the formation of fermentation products, as a breathable packaging material is used to avoid inflation of the pack due to gas formation upon the fermentation of the batter. However, in fresh batter according to the present invention fermentation products are not desired and the present invention aims at avoiding fermentation. The shelf-life of the fermented batter products is comparably short with only up to 4 days at ambient temperature and up to 17 days when stored at 4 °C.

### OBJECT TO BE SOLVED

Batters are available in many variations; they can be sweet, salty or savoury. Depending on the desired food product fresh ready-to-use batters require different levels of consistency, flow rates and other properties in which texture, taste, smell and color stability are concerned. For example, doughs for noodles require a higher viscosity than batters for spaetzle and those require a higher viscosity than batters for waffles, pancakes or crepes, which are more liquid.

The object of the present invention was to provide a new method for preparing fresh ready-to-use batters on the basis of starch-containing components and optionally fresh eggs with extended shelf-life, which allows maintaining the nutritional, sensory and rheological properties of a freshly prepared batter or dough over the storage period. Extended shelf-life requires the effective reduction of microorganisms usually by increased heating temperatures of a sterilization process, but the sensory and rheological qualities can change and desired compounds as flavors, vitamins and enzymes are destroyed. Heating at too high temperatures usually applied for effectively killing microorganisms may also deteriorate fresh egg components and effect undesired starch gelatinization. It was a particular object of this invention to provide a new method for the production of such fresh ready-to-use batters on the basis of starch-containing components and optionally comprising fresh egg components (whole egg, egg white or egg yolk), having extended shelf-life. A further object of the invention was to provide a new method for the production of such fresh ready-to-use batters on the basis of starch-containing and optionally fresh egg components having extended shelf-life which can be used for products of a wide variety of starches. The new method should in particular be suitable to avoid gelatinization of the starch and stiffening or denaturation (pre-cooking) of the fresh egg components. In a particular aspect, a new process should be provided, which allows pasteurization of a fresh batter without undesirably changing (in particular increasing) the batter viscosity. In a particularly preferred object of the invention the extended shelf-life and reduced starch gelatinization should be obtained with physical methods instead of adding chemical preservatives. In a further aspect of the invention the new method should be more effective with respect to the technical requirements and the amount of process steps. In particular, the new process should avoid possible microbiological re-contamination after the heat treatment of the batter. Thus, in particular, infection-free filling into aseptic packages with increased costs and higher technical requirements should be avoided by the new method of the present invention. A further object of the present invention was to provide a new fresh ready-to-use batter with extended shelf-life, being characterized by maintaining the nutritional, sensory and rheological properties of the freshly produced batter over the storage period. Thus, in a further aspect it was an object to provide a new and improved preservation method for fresh (raw) batter containing starch and optionally fresh egg components which is properly balanced between maintaining the properties of the freshly prepared batter, having e.g. a particular desired viscosity and optionally containing fresh egg components, and in particular avoid immoderate starch gelatinization to maintain the rheological and freshness properties of the batter on the one hand and sufficient killing of microorganism to achieve on the other hand an extended shelf-life of the fresh (raw) batter.

In a further aspect it was an object of the invention to provide an improved preservation method for fresh (raw) pourable batter, which allows controlling and maintaining the desired viscosity to provide pourable fresh batter with constant pouring characteristics even after heat treatment and storage.

The inventors of the present invention have surprisingly found that the above-mentioned disadvantages can be solved by providing the new method for the production of fresh ready-to-use batter on the basis of starch-containing components and optionally comprising fresh egg components as described herein. The new method uses a mild heating method, wherein the fresh batter is filled and sealed in the product package and the heat treatment for extending shelf-life is carried out on the packaged product, whereby the desired properties of the freshly prepared batter are maintained and the microorganisms can be reduced in a targeted manner. Furthermore, the advantage of heating the batter in the sealed package, a closed system, is the prevention of a possible re-contamination after the low temperature pasteurization because the entry paths of microorganisms, which are more likely in open systems, are avoided. This method makes it easier to keep the bacterial count or re-infection low.

The invention and its preferred embodiments are described in more detail below.

### DETAILED DESCRIPTION OF THE INVENTION

The present invention relates to a new method for the production of fresh ready-to-use batter on the basis of starch-containing components comprising the following steps:
a. preparing a batter by mixing at least one starch-containing dry component and at least one moist component
b. filling the batter into a package, wherein the dimensions of the package are controlled to receive a packaged batter which is characterized in that the shortest distance from a surface of the package to the core of the batter filled into the package is ≤ 10 cm
c. sealing of the packaged batter
d. carrying out a low temperature pasteurization of the batter in the package, comprising the following steps:
   i. heating the packaged batter within 1 h to 4 h to a core temperature not exceeding 90 °C
   ii. holding the core temperature for 5 - 60 minutes
   iii. cooling the packaged batter to < 10 °C within 2 h.

In contrast to the methods known from the prior art, the method for the production of fresh ready-to-use batter on the basis of starch-containing components according to the present invention uses a low temperature pasteurization, which is applied to the pre-packed and sealed fresh batter, wherein the pasteurization conditions are optimized to kill any microbial activity at low temperatures to avoid starch gelatinization and preserve the fresh sensory and nutritional properties and the rheological properties. Thus, it is a mild method to destroy microorganisms and extend shelf-life of the fresh batter, which allows avoiding using chemical preservatives. With the new method it can further be avoided that the fresh batter deteriorates with respect to nutritional, sensory and rheological qualities due to the heat treatment and thus natural components such as flavors, vitamins or enzymes can be preserved.

In the present context the term 'batter' refers to a mass that is foamy, soft or viscous, stirred or beaten and which is still pourable. The viscosity of batter may range from "heavy", that means adhering to an upturned spoon, to "thin", that means pourable or like single cream, enough to pour or drop from a spoon and sometimes called "drop batter". This includes in particular cake and pancake, crepes or waffle batter as well as the majority of cookie batter and also spaetzle batter. The viscosity of the freshly prepared (mixed) batters should not increase immoderately during or after the pasteurization process. According to the invention it is preferred that the viscosity value after the pasteurization process does not exceed the tenfold value of the viscosity measured in the freshly prepared batter prior to pasteurization. More preferably the viscosity value after the pasteurization process does not increase more than eightfold, even more preferred not more than sixfold, the value of the viscosity measured in the freshly prepared batter prior to pasteurization. The viscosity of the freshly prepared and pasteurized batters should further not decrease remarkably (e.g. due to starch degradation processes) during the extended storage period. Preferably, the viscosity of the fresh batters with extended-shelf live according to the present invention does not decrease by more than 30%, preferably not more than 25%, even more preferably not more than 20%, even more preferably not more than 10%, during the claimed shelf-life period (compared to the viscosity value determined after the pasteurization process).

Therein, the viscosity is determined with a conventional rotational viscosity determination method, such as the method described in the Examples below.

The spaetzle batters generally have a higher viscosity than e.g. the pancake batters. Maintaining the proper batter viscosity even with pasteurization and extended storage is important because excessive increase of viscosities may result in batters that can no longer be pressed or squeezed from the packaging in a sufficient and convenient manner and undesired decrease viscosities (e.g. upon storage) may result in batters which are too liquid to prepare the desired cooked or fried products.

In contrast, 'dough' differs from a batter in its thickness, usually due to a higher flour content. Doughs are mixtures of mostly flour and a moist component as milk and/or water that is stiff enough to be kneaded or rolled. It is dimensionally stable and has elastic properties. Dough is used mainly for breads and rolls and some rolled cookies, puff pastry and short pastry. The term 'dough' does also include kneadable pasta dough, which is made from a starch component as flour with or without eggs and other ingredients by doughing and molding. Although the new process of the present invention can in some instances also be applied to doughs, e.g. noodle doughs, as defined herein, it is however preferred to prepare pourable ready-to-use batter as defined herein. Doughs as well as batter may be sweet, salty or savoury. Many other flavorings such as herbs as garlic or wild garlic, parsley, chives, cress or dill, spices as pepper or chili, fruits, e.g. strawberries, blueberries and raspberries, or vegetables like zucchini and broccoli and extracts thereof may be added to the mixture.

The batters prepared with the new method of the present invention are intended as ready-to-use products. This generally means the pre-fabricated batter is provided to the consumer in a prepared form and is ready for consumption after a heating step as e.g. baking, cooking, frying or heating in steam. As mentioned above, such ready-to-use batters can be dry powder mixtures of dry batter ingredients which have to be mixed with moist components by the consumer or fresh batters which already include a moist component. In contrast to dry powder mixtures, a fresh batter contains already the moist components and is directly ready for baking, cooking or frying etc.. No further batter preparation steps are required. A fresh batter according to the present invention is characterized by constant rheological properties and sensory qualities, which are not significantly altered / deteriorated compared to the point of time after preparation thereof. A further characteristic of a fresh batter is its home-made and fresh taste. Batters used in the present invention are fresh batters which are prepared by mixing at least a dry starch-containing component and a moist component.

The moist component can be a liquid such as water, sparkling water or milk of animals or vegetables, such as almond, oat or soybean, products thereof, such as cream, sour cream, quark, kefir, yoghurt, skyr, buttermilk etc., as well as fruit juices, e.g. orange juice etc., or fresh eggs or other suitable moist components or mixtures thereof to prepare a batter. Also the use of edible oils as sunflower oil, olive oil, rapeseed oil, walnut oil, peanut oil and other suitable oils can be a liquid according to the present invention.

Generally, the above mentioned milk products can also be included in the form of dry powder (e.g. milk powder).

Batters for waffles or pancakes often comprise milk and eggs, optionally with water or sparkling water, whereas spaetzle usually comprise water and eggs, optionally with or without milk and quark as moist components.

The starch-containing component may be any suitable grain flour or isolated starch, including all milling grades and type numbers of wheat flour or wheat starch, rice flour or starch, potato flour or starch, rye flour or starch as well as spaetzle flour, starch or flour of barley, oats, maize, buckwheat, amaranth, quinoa, sorghum, spelt or all other suitable types of starch or flour or mixtures thereof. Fermented starch or fermented starch products are excluded. Also possible is the use of chia seeds, linseed, lentils, locust bean gum and further similar products. All these ingredients can be used separately or as a mixture. The kind of starch-containing component or mixtures thereof are selected depending on the desired sensory and rheological properties of the batter. Spaetzle are often made from wheat flour, e.g. type 405 or type 550, or spaetzle flour, which is a special mixture of flour and semolina or soft wheat and durum wheat that provides the necessary stiffness of the batter and leads to spaetzle which are firm to the bite. Pancakes and waffles are usually made of wheat flour, e.g. type 405 or type 505, buckwheat flour, spelt flour or wholemeal flour. It is also possible to select suitable starch-containing components for preparing gluten free batter, for which a raising demand exists. Therefore, all types of starch without gluten can be used alone or in mixtures thereof. A batter for gluten free waffles could comprise lentils and rice flour or potatoes. It is preferred to use wheat flour as the starch-containing component. In a further preferred embodiment of the present invention the batter comprises a low-germ wheat flour or a pregelatinized wheat flour, which turned out as particularly suitable for the low temperature pasteurization. Depending on the batter, pregelatinized wheat flour for emulsification and stabilization can replace conventional wheat flour in part or in its entirety. It prevents a phase break by avoiding water separation and stabilizes the dough. In contrast to other stabilizers, pregelatinized wheat flour needs no particular declaration as a stabilizer, because it can be labelled as wheat flour. The batter of the present invention can comprise further optional ingredients depending on the desired taste.

The batter can further be composed to contain components to be low or reduced in carbohydrate contents compared to conventional batter products and/or to contain high or enhanced amounts of protein components to qualify as a "low-carb" or "high-protein" product, which is a product variant desired by many consumers.

In the new method of the present invention the fresh batter on the basis of starch-containing components is subjected to a low temperature pasteurization, which allows the batter to maintain the rheological properties and nutritional and sensory qualities so that the batter maintain all rheological, nutritional and sensory qualities of a freshly prepared batter even after the heat treatment and over a prolonged storage period.

Pasteurization is a process of briefly heating a foodstuff to make it last longer. Therein, the material is heated to a certain temperature, usually from a minimum of 60 °C to a maximum of 100 °C, for a short time of 15 s to a few minutes. Temperature and heating time depend on the substance. The inventors of the present invention surprisingly found that a low temperature pasteurization step under the specific conditions defined herein is particularly suitable for extending the shelf-life of the fresh pourable ready-to-use batter on the basis of starch-containing components while maintaining the rheological, sensory and nutritional properties. In contrast to usual pasteurization methods in the new method of the present invention the low temperature pasteurization step d) is characterized by comprising a step i., wherein the heating time of the packaged batter is 1 h to 4 h to achieve a core temperature of the pre-packed batter which does not exceed 90 °C.

Heating time means the slowly heating of the batter within at most 4 h, preferably at most 3.5 h, more preferably at most 3 h. Preferably the batter is heated for at least 1 h, preferably at least 1.25 h, more preferably at least 1.5 h. In a preferred embodiment of the present invention the low temperature pasteurization is carried out for a period of 1.5 - 3.5 h. Thus, step. d) i. needs longer than a normal heating process of a conventional pasteurization, but is milder on the product, as the temperatures can be lowered to kill microorganisms. In this step d) i. the packaged batter is heated to a core temperature of at most 90 °C, preferably at most 85 °C, more preferably at most 80 °C, more preferably at most 75 °C, more preferably at most 70 °C, more preferably at most 65 °C.

In step d) i. the packaged batter is preferably heated to a core temperature of at least 45 °C. At temperatures higher than 90 °C the rheological properties and sensory qualities of the batter can be lost due to gelatinization of the starch. At temperatures below 45 °C germs are not killed sufficiently and the batter spoils more quickly.
In a preferred embodiment of the present invention the heating step of the low temperature pasteurization is carried out by heating the packaged batter to a core temperature of 45 to 75 °C, preferably of 46 to 74 °C, more preferably 47 to 73 °C, more preferably 48 to 72 °C, more preferably 49 to 71 °C, more preferably 50 °C to 70 °C. This preferred range is advantageous to achieve a core temperature which sufficiently destroys microorganisms and leading to a batter with extended shelf-life being storable. In contrast to other techniques, which are carried out at higher temperatures, the present invention also enables flavors, vitamins and enzymes to be preserved. This is very important, because consumers attribute health-promoting properties to fresh products and quality, including the preservation of vitamins.

The term 'core temperature' means the temperature of the batter itself reached in the heating process, i.e. the temperature of the batter inside the package. The core of the batter is the innermost (central) point of the batter in the package, which needs longest to be heated during the heating treatment.

The low temperature pasteurization step d) further comprises a step ii. with a specific temperature holding period, wherein the core temperature of the batter is held for up to 60 minutes, preferably up to 55 minutes, more preferably up to 50 minutes, more preferably up to 42.5 minutes, more preferably up to 40 minutes. The holding period is carried out for at least 5 minutes, preferably 7.5 minutes, more preferably 8 minutes, more preferably 8.5 minutes, more preferably 9 minutes more preferably 9.5 minutes, more preferably 10 minutes. In comparison to a normally used pasteurization, the temperatures of the low temperature pasteurization according to the present invention are slowly reached and mild. It is particularly important to carry out the temperature holding step d) ii. Only said additional holding step allows that the core temperatures are held for a sufficiently prolonged period to make it possible to reduce the number of germs under the applied low temperatures sufficiently. The time of the holding period can be varied within the defined ranges depending on the applied temperature. With higher core temperatures shorter holding periods can be applied and vice versa. The suitable selection of core temperature and holding period depends on the batter components, e.g. on the presence of heat labile components and/or the selected starch-components and their gelatinization temperature. A preferred embodiment is a holding period of the core temperature in step ii. of 10 to 40 minutes.

The low temperature pasteurization step d) further comprises a cooling step iii., wherein the sealed package with the pasteurized batter is cooled to a core temperature below 10 °C, preferably below 8 °C, more preferably below 7 °C within 2 hours.

Both terms 'germs' and 'microorganisms' are used synonymously in the present application and include pathogens which spoil the batter and cause harmful processes in other organisms.

In principle, packaging of food serves as protection against external influences such as light, damp and impurities. It may consist of any material used to package foodstuffs as foils, bags, boxes or other suitable formats for packing food. It is important that the packaging is resistant to the temperature influences of the low temperature pasteurization procedure described above. On the other hand, the package must allow heating of the batter inside to the desired core temperature and should not isolate the batter from heat.

Heating the batter in a sealed package, which means in a closed system, as carried out in step b) to d) of the process of the present invention provides a further advantage. Therewith, a possible contamination or re-contamination after the low temperature pasteurization can be avoided because the entry paths of microorganisms, which are more likely in open systems, are avoided. This method makes it easier to keep the bacterial count low.

Sealing of the package in step c) can be realized by any methods used to seal packaged food, e. g. by gluing or welding methods, using e.g. ultrasonic energy, heat or thermosetting.

The term 'rheological properties' includes the characteristic flow rate and thus the viscosity and suitable consistency of the respective batters. These are important to predict and control the possible change of the structure / texture of a material when chewed or swallowed by the consumer. Pancakes, waffles, spaetzle and other batter are pourable and thus squeezable and thus have different rheological properties compared to doughs for bread, short or puff pastry, which are more solid. The rheological properties of the freshly prepared batter should not deteriorate unduly in the low temperature pasteurization step d) and remain essentially constant over the desired storage period, which is made possible by the method for the production of the batter of the present invention. The rheological properties and viscosity of the batter can be controlled and determined by measuring the viscosity with a conventional viscosity determination method, such as with a plate-plate-geometry in a Kinexus pro apparatus of the company Malvern as described further in the Examples below.

A further aspect on quality relates to the 'sensory qualities' of batters. Depending on the chosen batter, e.g. texture, taste, smell as well as the visual properties like the color are of importance for every product prepared from the batter of the invention by the consumer. The products prepared from the fresh ready-to-use batter of the invention by cooking, frying, baking etc. should taste fresh and home-made, similar as home-made fresh products, and the characteristics of fresh-made batter should be maintained over the whole extended storage period. Viscosity and consistency are closely related to sensory requirements of the batter, because the taste profile is always associated with consistency and vice versa. For example, when producing a batter for spaetzle, it is important that it is firm to the bite. Pancakes, on the other hand, should be softer than and not as firm for the bite as spaetzle. To achieve the desired consistency of the baked, cooked, fried product viscosity and consistency of the used batter plays an important role. If the viscosity of a fresh batter decreases unduly during the storage period, e.g. due to disintegration of starch, the desired consistency and texture of the baked, cooked or fried product cannot be achieved any longer.

The sensory qualities of the pre-fabricated fresh ready-to-use batter and also the product prepared therefrom by the consumer, that means the batter which is heated by the consumer for preparing the desired food product, are also kept essentially stable by the mild low temperature pasteurization method of the present invention.

As mentioned above, the fresh ready-to-use batter of the present invention can be batters of sweet, savoury or salty taste. Batters of sweet taste are e.g. batters for preparing waffles, pancakes or crepes and batters of salty taste are e.g. batters for preparing spaetzle. A sweet batter of the present invention is characterized by a sufficient sugar content to produce a sweet taste, while the salty batter according to this application is characterized by the addition of adequate amounts of salt. Savoury batters are produced in the same way, but savoury ingredients like ham and cheese can be added. However, salt or sugar may be present in all types of batter.

The 'nutritional quality' of the batter can be preserved even after the low temperature pasteurization. That means that important heat-sensitive nutrients like vitamins, enzymes as well as flavors can be preserved in the batter.

Fat is an important component in the production of a batter and fulfils a variety of functions. Fats significantly increase the culinary value of a product by improving sensory qualities as taste and texture. Fats have a decisive influence on the optimum mixing of recipe components, volume development, structure of crumb and desired porosity as well as the shelf-life of the finished food product. In general, all edible fats for the production of a batter can be used. This includes e.g. solid fat as butter, cocoa butter, lard or margarine or any edible oil as suitable for preparing the batter, e.g. in particular the oils mentioned above. In a preferred embodiment of the present invention the fat component is rapeseed oil.

Food additives are usually added to foods for a specific purpose. For example, food additives can be added to influence shelf-life, the appearance and/or the handling properties of a food product.

Various food additives are available, which can achieve these different benefits. The functional classes for food additives include antioxidants, raising agents, emulsifiers, colorants, solidifying agents, humectants, fillers, gelling agents, flavour enhancers, complexing agents, preservatives, flour improvers, modified starches, packaging gases, acidifiers, acidity regulators, foaming agents, anti-foaming agents, melting salts, stabilizers, sweeteners, carriers, propellants, release agents, coating agents and thickeners. The use of food additives is regulated by law in the German Food and Feed Code (LFGB) and in several European regulations. In Germany, also the German Ordinance on Registration of Additives (ZZuIV) still applies in parts.

In principle, all additives in accordance with the food regulations can be added to the fresh ready-to-use batter of the present invention. Preferred additives are antioxidants, raising agents, emulsifiers, thickeners, sweeteners.

Antioxidants are added to many foods to preserve desired properties as sensory qualities. Due to their chemical structure, these compounds are able to bind free radicals and thus render them harmless. They prevent fat from spoiling, colors from changing or vitamins from being broken down. Some antioxidants are also used as preservatives, others are also good acidifiers. In the food industry, several antioxidants are often used in one product in order to achieve a more even and longer effect at lower concentrations. Examples of antioxidants are ascorbic acid, salts and fatty acid esters thereof, isoascorbic acid and salts thereof, butylhydroxyanisole, butylhydroxytoluene, esters of gallic acid and tocopherols. It is preferred to avoid the addition of additives in the fresh ready-to-use batter of the present invention as far as possible. However, in a preferred embodiment ascorbic acid can be added. Ascorbic acid is also known as vitamin C and is thus well tolerated by consumers. Ascorbic acid can be added to improve the properties of the batter and increases the shelf-life by acting as an antioxidant to counteract the oxidation of the flour and fat. It slows down the rancidity of fatty acids and leads to the stabilization of gluten proteins.

Also raising agents, which release carbon dioxide in combination with moisture, heat and possibly acid, can be used according to the present invention. The gas released from raising agents is trapped in the batter and expands when heated. This increases the volume of the dough and keeps it airy and fluffy after baking. Chemical raising agents, such as ammonium carbonate, diphosphates, potassium carbonate, potassium phosphate, potassium tartrate, carbon dioxide, magnesium carbonate, potassium sodium tartrate, sodium carbonate, sodium tartrate, polyphosphate, sodium aluminium phosphate or triphosphates are known food additives. Among the raising agents the addition of sodium bicarbonate is preferred.

In principle, also yeasts or yeast products act as loosening agents by fermentation. However, with the new low temperature pasteurization method of the present invention, comprising the specific holding period in step d) ii., yeasts are inactivated. Further, it is not desired to maintain any fermentation activity in the ready-to-use batter, as the batter should be storable with constant properties, which is not possible with active yeasts. Accordingly, the addition of yeasts or lactic acid bacteria is not preferred.

Emulsifiers are auxiliary substances which serve to mix and stabilize two immiscible liquids, such as oil and water, into a finely divided mixture, the so-called emulsion. Examples for emulsifiers are lecithin, mono- and diglycerides of fatty acids, diacetyl tartaric acid esters. A preferred embodiment of the present invention is the addition of eggs of different animals which include lecithin and have emulsifying properties which, due to their chemical structure, can homogenize a hydrophilic aqueous phase with a hydrophobic fat phase. Eggs enable an even, stable mixture of fat and water phases (emulsion). Among others, pancakes and crepes as well as spaetzle can be prepared with eggs of animals, preferably with chicken eggs. Eggs can be whole fresh eggs, whole dried eggs, as well as only egg yolk. Further, the egg white, which does not have an emulsifying property, can also be used. The addition of egg whites makes pastries light and airy.

In the presence of oxygen, food spoils easily. On the one hand, the gas sets chemical processes in motion that affect rheological properties and sensory qualities like color, taste and consistency. On the other hand, numerous microorganisms can multiply very well in an oxygen-rich atmosphere and spoil food in different ways. Packing gases can be used to ensure that the batter comes into as little contact with oxygen as possible. They can be filled into the packaging before, after or together with the batter and thus displace the oxygen from its immediate environment.

In step b) of the process of the present invention a suitable package must be chosen. Preferably, a gas-tight packaging is used, having a suitable oxygen permeability rate in order to avoid that the batter is contacted with oxygen to remain fresh for longer. Preferably, the packages used in step b) of the present invention have a high gas barrier with an oxygen permeability of < 5 g/m²/d, preferably < 4 g/m²/d, more preferably < 3 g/m²/d (38 °C, 90 % RH), to prevent undesirable gas exchange. Thus, the batter is stored in a protective atmosphere under exclusion of oxygen, which contributes to an extension of shelf-life and additionally counteracts microbial contamination and preserves flavor.

The package in step b) is further designed to exhibit dimensions allowing packaging the batter so that in the resulting filled package the shortest distance from a surface of the package to the core of the batter preferably does not exceed 10 cm, preferably it is ≤ 5 cm. This shortest dimension characteristic thus relates to the maximum thickness of the package. This is important to achieve sufficient heating of the batter with the low temperature pasteurization method described herein but still achieve sufficient reduction of microorganisms and prolonged shelf-life under the specific low temperature pasteurization conditions defined herein.

Food thickeners are frequently based on either polysaccharides (starches, vegetable gums, and pectin), or proteins. Microbial and vegetable gums used as food thickeners include e.g. alginate, guar gum, locust bean gum, and xanthan gum etc.. Proteins used as food thickeners include e.g. collagen, egg whites, and gelatin. Sugar polymers include e.g. agar, carboxymethyl cellulose, pectin and carrageenan. In a preferred embodiment of the present invention guar gum may be used as thickener.

Sweeteners are substances used to sweeten foods and in table sweeteners. Examples for sweeteners are acesulfame-K, aspartame, cyclamate, saccharin, sucralose, thaumatin, neohesperidine DC, steviol glycosides, neotame, acesulfame-aspartame salt, advantame. Sugar alcohols, which are also considered sweeteners, include sorbitol, mannitol, isomalt, polyglycitol syrup, maltitol, lactitol, xylitol and erythritol. Other substances to replace sugar are honey or maple syrup. Maple, stevia and xylitol are often used to make pancakes or waffles. Natural sweeteners such as sugar (e.g. cane sugar, beet sugar, saccharose, fructose and glucose), honey, agave syrup, rice syrup or maple syrup are preferred to obtain fresh batter with home-made character.

In a particularly preferred embodiment of the invention the batter comprises a combination of rapeseed oil as the fat component, sodium bicarbonate as a raising agent and sugar.

Flavorings are compounds which can be added to foods and also to batter to give them a particular smell and/or taste. A flavoring may consist of numerous flavoring substances, flavoring extracts, thermally obtained reaction flavorings, smoke flavorings and flavoring precursors. Preferred flavors, e.g. in pancake batter are vanilla, rum or bitter almond. Natural flavors are preferred to obtain fresh batter with home-made character.

With the new method of the present invention the shelf-life of the prepared fresh doughs can be extended up to 42 days. In the sense of the present invention shelf-life is characterized by stability against microbiological spoilage but also includes stability against deterioration or change of physical characteristics such as viscosity, texture, nutritional and sensory characteristics. Extended shelf-life up to 42 days can in particular be achieved by storing the fresh dough at lower temperatures ≤ 10 °C, in particular between 1 °C to 10 °C, in particular at temperatures between 2 °C and 7 °C. By storing the fresh doughs at storage temperatures above 10 °C the maximum shelf-life may be lower, because perishable processes, which are inhibited at temperatures below 10 °C, are promoted. At freezing temperatures below the defined ranges, changes in quality, especially sensory properties, may occur. Freezing the fresh doughs of the present invention is not preferred as frozen foods have to be defrosted by the consumer prior to use and the properties of the batter (rheology, viscosity etc.) may deteriorate after defrosting due to destruction of the starch. A preferred embodiment of the present invention is storing the batter in a refrigerator at 2 °C to 6 °C. This supports extended shelf-life of the batter.

It has often been necessary to compromise between the sensory, nutritional and qualitative properties of the batter and the extension of shelf-life. With the present invention it would be no longer an issue since the qualitative demands on taste, smell and color as well as rheological properties and the associated consistency can be maintained over weeks despite heat treatment to reduce microorganisms of the batter.

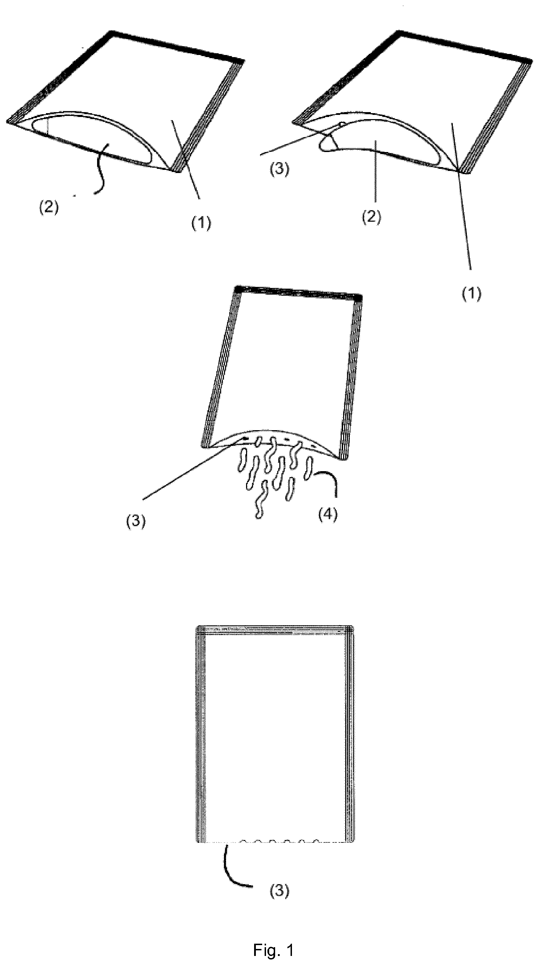

In a further preferred embodiment of the present invention the fresh ready-to-use batter is filled and pasteurized in a package comprising (detachably) sealed openings in the form of one or multiple circular holes, e.g. in the bottom of the package. The consumer can then open said circular holes and press or squeeze the batter through said holes directly into the pan or pot for baking or cooking. This is in particular preferred for fresh ready-to-use spaetzle batter, which allows dosing the batter into the hot water directly in the desired characteristic spaetzle form. The effort of scratching or cutting the specific spaetzle is avoided and the consumer can prepare fresh home-made spaetzle easily. An example of such a prepared embodiment is shown in Figure 1.

### DESCRIPTION OF THE FIGURES

(1) package filled with fresh pourable ready-to-use batter
(2) (detachable) sealing of the one or multiple holes in the package
(3) hole(s) in the package for pressing the batter through
(4) fresh pourable ready-to-use batter pressed out of the package, e.g. in the form of fresh spaetzle

### EXAMPLES

### Example I - Preparation of a fresh ready-to-use pancake batter

### Step a)

A fresh ready-to-use pancake batter was prepared by thoroughly mixing the following ingredients to obtain a homogeneous pourable batter:
250 g of flour/starch-mixture as the starch containing component
410 g of egg/milk-mixture as the water-containing component (approx. 1:1)
95 g of oil
110 g of sugar
0.5 g of salt

### Step b) and c)

The batter was filled into a high gas barrier package (oxygen permeability < 4.0 g/m²/d, 38 °C, 90 % RH), which was sealed by ultrasonic in the next step.

### Step c)

Subsequently, a low temperature pasteurization was carried out by heating the sealed package with the batter in a hot air pasteurization chamber. The following parameters were selected:
Heating time: 1.5 h to 3.5 h
Core Temperature: 57 °C - 63 °C
Holding time: 20 min
Cooling time: 2 h below 7 °C

Then, the batter was stored for 42 days between 2 °C and 7 °C.

After 42 days the sensory and rheological properties were determined with the following results:

| | **Directly after step d) iii.** | **After 42 days storage below 7 °C** |
|---|---|---|
| **Taste** | sweet, egg like | sweet, egg like no deterioration in taste |
| **smell** | fresh | Fresh no deterioration in smell |
| **Optical appearance** | yellow batter | yellow batter no deterioration in colour |
| **Rheological properties / viscosity** | 5100 mPas | 5000 mPas |

### Example II - Preparation of a fresh ready-to-use spaetzle batter

### Step a)

A fresh ready-to-use spaetzle batter was prepared by thoroughly mixing the following ingredients to obtain a homogeneous pourable batter:
460 g of flour/starch-mixture as the starch containing component
530 g of egg/water-mixture as the liquid component (approx. 1:1)
10 g of salt

### Step b) and c)

The batter was filled into a high gas barrier package (oxygen permeability < 4.0 g/m²/d, 38 °C, 90 % RH), which was sealed by ultrasonic in the next step.

### Step d)

Subsequently, a low temperature pasteurization was carried out by heating the sealed package with the batter in a hot air pasteurization chamber. The following parameters were selected:
Heating time: 1.5 h to 3.5 h
Core Temperature: 57 °C - 63 °C
Holding time: 20 min
Cooling time: 2 h below 7 °C

Then, the batter was stored for 42 days between 2 °C and 7 °C.

After 42 days the sensory and rheological properties were determined with the following results:

| | **Directly after step d) iii.** | **After 42 days storage below 7 °C** |
|---|---|---|
| **Taste** | salty, egg like | salty, egg like no deterioration in taste |
| **smell** | fresh | fresh no deterioration in smell |
| **Optical appearance** | yellow batter | yellow batter no deterioration in colour |
| **Rheological properties / viscosity** | 90400 mPas | 90100 mPas |

Both Examples I and II show, that even after prolonged storage the fresh batter characteristics taste, smell and optical appearance have been preserved. Also the rheological properties are not deteriorated so that even after the storage period the batter was pourable and could be squeezed out of the package as desired.

### Method for Determining the Viscosity

The measurement of the viscosity is determined with a rotational rheometer Kinexus Pro of the company Malvern Panalytical using a plate-plate geometry.

The measurement was carried out with the pasteurized batter directly after process step d) iii. to determine the viscosity prior to storage and another measurement was carried out at the end of the tested storage period to determine the changes of viscosity upon storage.

## Claims

1. A method for the production of pourable fresh ready-to-use batter on the basis of starch-containing components, comprising the following steps:
a) preparing a batter by mixing at least one starch-containing dry component and at least one moist component
b) filling the batter into a package, wherein the dimensions of the package are controlled to receive a packaged batter which is **characterized in that** the shortest distance from a surface of the package to the core of the batter filled into the package is ≤ 10 cm,
c) sealing of the packaged batter
d) carrying out a low temperature pasteurization of the batter in the package, comprising the following steps:
i. heating the packaged batter within 1 h to 4 h to a core temperature not exceeding 90 °C
ii. holding the core temperature for 5 - 60 minutes
iii. cooling the packaged batter to < 10 °C within 2 h.

2. The method for the production of batter according to claim 1, wherein the heating time of the low temperature pasteurization in step d) i. is 1.5 - 3.5 h.

3. The method for the production of batter according to any one of the preceding claims, wherein in step d) i. the packaged batter is heated to a core temperature of 45 to 75 °C.

4. The method for the production of batter according to any one of the preceding claims, wherein in step d) ii. the core temperature is held for 10 to 40 minutes.

5. The method for the production of batter according to any one of the preceding claims, wherein in step a) further one or more components selected from sugar, eggs, ascorbic acid, salt, fat and sodium bicarbonate are added.

6. The method for the production of batter according to any one of the preceding claims, wherein in step a) the at least one starch-containing dry component is wheat flour.

7. The method for the production of batter according to any one of the preceding claims, wherein in step a) the at least one starch-containing dry component is selected from a low-germ wheat flour and pregelatinized wheat flour.

8. The method for the production of batter according to claim 5, 6 or 7, wherein a fat component is added, which is rapeseed oil.

9. The method for the production of batter according to any one of the preceding claims, wherein the packaging of the batter is **characterized by** having an oxygen permeability of < 5 g/m²/d, preferably < 4 g/m²/d (38 °C, 90 % RH).

10. A fresh ready-to-use batter on the basis of starch-containing components, which is produced by the method according to any one of the preceding claims, being **characterized by** an extended shelf-life of up to 42 days upon storage at 1 °C to 10 °C.

11. The batter according to claim 10, being **characterized by** constant rheological properties and nutritional and sensory qualities after the heating process and storage period of up to 42 days.

12. A package comprising detachably sealed holes and the fresh ready-to-use batter according to claim 10 or 11 for pressing the fresh ready-to-use batter through said holes prior to baking or cooking.
